Europäisches Patentamt

European Patent Office

Office européen des brevets

(19)

(11) Veröffentlichungsnummer: **0 009 243**
**B1**

(12) **EUROPÄISCHE PATENTSCHRIFT**

(45) Veröffentlichungstag der Patentschrift:
10.06.81

(21) Anmeldenummer: 79103537.1

(22) Anmeldetag: 19.09.79

(51) Int. Cl.³: **G 02 F 1/133**

(54) Verfahren zur Herstellung von Abstandselementen für die Distanzierung zweier Platten sowie Verwendung der Abstandselemente in einer Anzeigevorrichtung.

(30) Priorität: 22.09.78 DE 2841435

(43) Veröffentlichungstag der Anmeldung:
02.04.80 Patentblatt 80/7

(45) Bekanntmachung des Hinweises auf die Patenterteilung:
10.06.81 Patentblatt 81/23

(84) Benannte Vertragsstaaten:
AT CH FR GB IT NL SE

(56) Entgegenhaltungen:
DE-A-2 445 325
FR-A-2 300 350
US-A-3 902 789

(73) Patentinhaber: SIEMENS AKTIENGESELLSCHAFT Berlin
und München, Postfach 22 02 61, D-8000 München 22 (DE)

(72) Erfinder: Hofmann, Horst, Herzogstandstrasse 12,
D-8000 München 90 (DE)

Verfahren zur Herstellung von Abstandselementen für die Distanzierung zweier Platten sowie
Verwendung der Abstandselemente in einer Anzeigevorrichtung

Die Erfindung betrifft ein Verfahren gemäß dem Oberbegriff des Anspruchs 1 und bezieht sich ferner auf die Verwendung von Abstandselementen, die nach einem solchen Verfahren hergestellt worden sind, in einer Anzeigevorrichtung. Ein Display mit derartigen Abstandselementen ist aus der DE-A-22 54 940 bekannt.

Bei einer Reihe von elektrooptischen Displays ist darauf zu achten, daß die beiden Trägerplatten einen möglichst genauen Abstand zueinander einhalten. Dies gilt vor allem für Flüssigkristallanzeigen (FKA's), da wichtige FKA-Kenndaten wie beispielsweise das Schaltverhalten oder die Höhe der Schwellspannung empfindlich von der Dicke der Flüssigkristallschicht abhängen. Besonders hoch sind dabei die Anforderungen, wenn das FKA in einem Multiplexverfahren und/oder mit dem sogenannten »Bistabilitätseffekt« betrieben werden soll; im Extremfall werden heutzutage bereits Abstandstoleranzen von ±5%, also von Bruchteilen eines μm verlangt.

Um solche Distanzgenauigkeiten zu erzielen, hat man in den vergangenen Jahren eine Fülle von Lösungsansätzen gemacht und dabei die unterschiedlichsten Konzepte verfolgt. So wurde unter anderem in der bereits zitierten Offenlegungsschrift vorgeschlagen, den zwischen den Displayplatten befindlichen Rahmen mit Abstandshaltern in Form kleiner Fasern (Glasfasern, Metallfasern, Haarkristalle oder dergl.) anzureichern. Es hat sich gezeigt, daß Glasfasern ihren Zweck recht gut erfüllen, denn sie sind thermisch an ihrer Umgebung angepaßt und lassen sich mit einem bis auf ±10% genauen Durchmesser relativ bequem herstellen. Noch maßhaltiger wären Metallfasern, da geeignet starke Metallfäden mit Dickeschwankungen von ±5% an sich zur Verfügung stehen. Metallische Abstandspartikel haben aber bisher keinen Eingang in die Praxis finden können, und zwar im wesentlichen deshalb, weil ihr thermischer Ausdehnungskoeffizient vielfach zu stark von dem der übrigen Displayteile abweicht und weil vor allem ein Metalldraht wegen seiner Duktilität mit vertretbar großem Aufwand nicht zerkleinert werden kann. Hinzu kommt, daß Metallteilchen elektrisch leiten und daher sowieso nur für wenige Spezialfälle in Frage kommen.

Es ist Aufgabe der vorliegenden Erfindung, ein Verfahren zu entwickeln, mit dem sich auf rationelle und vor allem auch wirtschaftliche Weise Distanzelemente herstellen lassen, die eine extrem genaue Distanzierung zweier Substrate ermöglichen. Diese Aufgabe wird erfindungsgemäß durch die im Patentanspruch 1 angegebene Methode gelöst.

Der Lösungsvorschlag beruht auf der Beobachtung, daß ein erfindungsgemäß bearbeiteter Draht durchgehend, also auch in seiner metallischen Seele, spröde ist und somit mühelos in herkömmlicher Weise zerkleinert werden kann.

Dieses Phänomen ist darauf zurückzuführen, daß der Stoff, mit dem der Draht an seiner Oberfläche eine chemische Verbindung eingeht während des Umwandlungsprozesses auch noch in das Innere des Drahtes eindiffundiert und dort das Gefüge spröde macht. Der Versprödungseffekt tritt schon dann ein, wenn man der Drahtmantel nur bis zu einer Tiefe von etwa 20% des Drahtdurchmessers chemisch umwandelt ein solcher Vorgang wirkt sich, wie durch Messungen bestätigt werden konnte, auf die Dicke des Ausgangsfadens nicht aus; die enge Querschnittstoleranz bleibt also vollständig erhalten.

Verändert werden dagegen zwei andere wichtige Parameter: Der thermische Ausdehnungskoeffizient $\varkappa$ und die elektrische Leitfähigkeit $\sigma$. Der $\varkappa$-Wert der spröden Phase ist so niedrig, daß bei den zu erwartenden Temperaturzyklen während der Herstellung und in Normalbetrieb keine nennenswerten Störunge auftreten können. Die Größe $\sigma$ hängt von der Stärke des chemisch umgesetzten Fasermantel ab und kann jeden Wert zwischen »halbleitend und »isolierend« annehmen. Im übrigen ist e auch möglich, die Distanzfaser zu einem gute elektrischen Leiter zu machen: Hierzu is lediglich die Faserhülle wieder in ihren metall schen Ausgangszustand zurückzuführen. Ein solche Maßnahme ist zumindest bei karburierte Fäden ohne weiteres möglich und bleit ebenfalls ohne Einfluß auf die Faserabmessur gen.

Weitere vorteilhafte Ausgestaltungen un Weiterbildungen der Erfindung sind Gegenstan zusätzlicher Ansprüche.

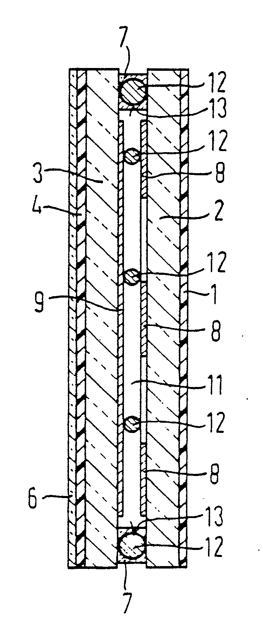

Die Erfindung soll nun an einem besondere bevorzugten Ausführungsbeispiel unter Bezug nahme auf die beigefügte Figur näher erläute werden.

Die Figur zeigt in einem etwas schematisierte Seitenschnitt eine Flüssigkristallanzeige. Da dargestellte Display enthält im einzelnen eine vorderen Linearpolarisator 1, eine vorder Trägerplatte 2, eine hintere Trägerplatte 3, eine hinteren, zum vorderen gekreuzten Linearpolar sator 4 und einen Reflektor 6. Die beide Substrate 2, 3 sind über einen umlaufende Rahmen 7 hermetisch dicht miteinander verbu den und tragen auf ihren einander zugewandte Innenflächen jeweils elektrisch leitende Beläg (segmentierte Vorderelektrode mit Segmen elektroden 8, durchgehende Rückelektrode S Die vom Rahmen und den beiden Platte begrenzte Kammer ist mit einem Flüssigkrist 11 gefüllt. Die Flüssigkristallanzeige arbeitet i vorliegenden Fall nach dem Prinzip der sog nannten »Drehzelle«, die in der DE-B-21 58 5i detailliert geschildert ist.

Distanziert werden die beiden Substrate 2, durch Fasern 12, die sowohl in den Rahmen 7 a auch in die Flüssigkristallkammer eingebrac

sind. Jedes dieser Abstandteilchen besteht aus karburiertem Molybdän, ist etwa 50 bis 100 µm lang und hat einen Durchmesser von 8±0,5 µm. Im Rahmen sollten die Fasern mit einem Anteil zwischen 0,05 und 0,3 Gewichtsprozent und nach Möglichkeit zwischen 0,1 und 0,2 Gew.-%, bezogen auf das Gewicht der Rahmenmasse, vorliegen; bei einem solchen Mischungsverhältnis ist sichergestellt, daß die statistisch verteilten Partikel einerseits nicht zu weit voneinander entfernt sind und andererseits nicht übereinanderliegen.

Die Distanzelemente lassen sich folgendermaßen herstellen: Ein Molybdänfaden wird durch einen Bekohlungsofen bei etwa 1100°C karburiert. Hierzu leitet man ein Schutzgas der Zusammensetzung 90% N$_2$/10% H$_2$ bei 20°C durch eine mit n-Heptan gefüllte Waschflasche mit einer Strömungsgeschwindigkeit von 20 bis 22 Liter/Std. Auf diese Weise erhält der Molybdändraht eine 1,5 µm dicke Mo$_2$C-Außenschicht 13. Anschließend zerkleinert man den so behandelten Draht in einer Mühle oder in einem Mörser.

Der beim Mahlen anfallende Abrieb ist außerordentlich feinteilig und macht sich, soweit dies bisher festgestellt werden konnte, nicht störend bemerkbar. Werden nämlich die Fasern einer Glaslotmasse beigegeben, so diffundiert der Abrieb während des endgültigen Verschmelzens restlos in das Glaslot ein. Ein organischer Kleber kann durch den Abrieb nicht belastet werden, weil er ohnehin in aller Regel einen feinteiligen Füllstoff enthält. Nicht auszuschließen ist allerdings die Möglichkeit, daß die einzelnen Abriebpartikel im Falle, daß die Fasern ohne Einbettungsmedium in der Flüssigkristallkammer verteilt sind, lokale Orientierungsstörungen in der Flüssigkristallschicht hervorrufen. In solchen Fällen müßte man von den herkömmlichen Mahlgefäßwerkstoffen wie Achat oder Aluminiumoxid auf abriebfreie Materialien, etwa porenfrei gesintertes reines tetrabor-Borcarbid, übergehen.

Die Erfindung ist nicht auf das dargestellte Ausführungsbeispiel beschränkt. So kommen neben FKA's auch andere Flachdisplayarten, beispielsweise elektrochrome Anzeigen, in Betracht. Darüber hinaus lohnt sich das vorgeschlagene Herstellungsverfahren stets dann, wenn der Abstand zwischen zwei Substraten von einem vorgegebenen, sehr geringen Wert möglichst wenig abweichen soll. Dabei versteht es sich von selbst, daß die Fasern hinsichtlich ihrer Beschaffenheit, ihrer Dimensionierung und ggf. ihres Gewichtsanteils auf den konkreten Anwendungsfall abzustimmen sind und daher innerhalb weiter Grenzen variieren können.

## Patentansprüche

1. Verfahren zur Herstellung von faserförmigen, metallhaltigen Abstandselementen mit einem Durchmesser <100 µm für die Distanzierung zweier Platten, die insbesondere zu einer Anzeigevorrichtung gehören, dadurch gekennzeichnet, daß zunächst aus einem Ausgangsmaterial auf der Basis eines Metalls der vierten bis sechsten Nebengruppe des Periodensystems ein Draht hergestellt wird, daß dann die Mantelzone dieses Drahtes in eine spröde Verbindung überführt wird und daß der so vorbehandelte Draht anschließend in einzelne Abschnitte, die Abstandselemente, zerkleinert wird.

2. Verfahren nach Anspruch 1, dadurch gekennzeichnet, daß die spröde Verbindung ein Karbid, ein Borid, ein Nitrid oder ein Silizid ist.

3. Verfahren nach Anspruch 2, dadurch gekennzeichnet, daß die spröde Verbindung ein Molybdän-, Titan-, Tantal- oder Wolframkarbid ist.

4. Verfahren nach einem der Ansprüche 1 bis 3, dadurch gekennzeichnet, daß nach der Zerkleinerung des Drahtes die Mantelzonen der einzelnen Fasern wieder in das metallische Ausgangsmaterial zurückgeführt werden.

5. Verwendung von Abstandselementen, hergestellt nach einem der Ansprüche 1 bis 3, in einer Anzeigevorrichtung, insbesondere in einer Flüssigkristallanzeige mit zwei durch die Abstandselemente zu distanzierenden Platten, dadurch gekennzeichnet, daß die spröde Mantelzone (13) der Abstandselemente (12) höchstens 3 µm, insbesondere 2 µm dick ist.

6. Verwendung nach Anspruch 5, dadurch gekennzeichnet, daß die Abstandselemente (12) zwischen 50 und 100 µm lang und zwischen 4 und 30 µm dick sind.

7. Verwendung nach Anspruch 5 oder 6 in einer Anzeigevorrichtung mit einem die beiden Platten dicht miteinander verbindenden Rahmen, dadurch gekennzeichnet, daß die Abstandselemente (12) in dem Rahmen (7) mit einem Gewichtsanteil zwischen 0,05 und 0,3%, insbesondere zwischen 0,1 und 0,2%, bezogen auf das Gewicht der Rahmenmasse, eingebettet sind.

8. Verwendung nach einem der Ansprüche 5 bis 7 in einer Anzeigevorrichtung mit einem die beiden Platten dicht miteinander verbindenden Rahmen, dadurch gekennzeichnet, daß sich die Abstandselemente (12) im Inneren der durch den Rahmen (7) und die beiden Platten (2, 3) begrenzten Kammer befinden.

9. Verwendung nach Anspruch 8, dadurch gekennzeichnet, daß die im Inneren der Kammer befindlichen Abstandselemente (12) in einer die beiden Platten (2, 3) miteinander verbindenden Masse eingebettet sind.

## Claims

1. Process for the production of fibriform, metalcontaining spacing elements having a diameter <100 µm for spacing apart two plates, which in particular form part of a display device, characterised in that a wire is first produced from a starting material having a basis of a metal of the fourth to sixth subgroups of the periodic system, the surface zone of this wire is then converted into a brittle compound, and the wire so treated is subsequently broken up into individual sections to form the spacing elements.

2. Process as claimed in Claim 1, characterised in that the brittle compound is a carbide, boride, nitride or silicide.

3. Process as claimed in Claim 2, characterised in that the brittle compound is a molybdenum carbide, titanium carbide, tantalum carbide, or tungsten carbide.

4. Process as claimed in one of the Claims 1 to 3, characterised in that, after the breaking-up of the wire the surface zones of the individual fibres are re-convertef into the metallic starting material.

5. The use of spacing elements produced as claimed in one of the Claims 1 to 3, in a display device, in particular in a liquid crystal display having two plates which are be spaced apart by the spacing elements, characterised in that the brittle surface zone (13) of the spacing elements (12) has a thickness of at most 3 μm, in particular 2 μm.

6. Use as claimed in Claim 5, characterised in that the spacing elements (12) have a length of between 50 and 100 μm and a thickness of between 4 and 30 μm.

7. Use as claimed in Claim 5 or 6 in a display device having a frame which connects the two plates tightly to one another, characterised in that the spacing elements (12) are embedded in the frame (7) in a weight of between 0.05 and 0.3%, in particular between 0.1 and 0.2%, in relation to the weight of the frame material.

8. Use as claimed in one of the Claims 5 to 7 in a display device having a frame which tightly connects the two plates to one another, characterised in that the spacing elements (12) are arranged within the chamber which is defined by the frame (7) and the two plates (2, 3).

9. Use as claimed in Claim 8, characterised in that the spacing elements (12) which are arranged within the chamber are embedded in a mass which connects the two plates (2, 3) to one another.

## Revendications

1. Procédé de préparation d'éléments d'entretoisement fibreux, contenant des métaux, ayant un diamètre inférieur à 100 microns, pour maintenir la distance entre deux plaques qui appartiennent, notamment à un dispositif d'affichage, caractérisé en ce qu'il consiste d'abord à préparer un fil en une matière de départ à base d'un métal des quatrième à sixième sous-groupes de la classification périodique des éléments, à transformer ensuite la zone latérale de ce fil en un composé fragile, et ensuite à tronçonner le fil ainsi traité à l'avance en tronçons distincts qui sont les éléments d'entretoisement.

2. Procédé suivant la revendication 1, caractérisé en ce que le composé fragile est un carbure, un borure, un nitrure ou un siliciure.

3. Procédé suivant la revendication 2, caractérisé en ce que le composé fragile est un carbure de molybdène, un carbure de titane, un carbure de tantale ou un carbure de tungstène.

4. Procédé suivant l'une des revendications 1 à 3, caractérisé en ce qu'il consiste, après le tronçonnage du fil, à ramener les zones latérales des diverses fibres à l'état métallique de la matière de départ.

5. L'utilisation d'éléments d'entretoisement préparée suivant l'une des revendications 1 à 3, dans un dispositif d'affichage, notamment dans un dispositif d'affichage à cristal liquide, ayant deux plaques à maintenir à une certaine distance l'une de l'autre par des éléments d'entretoisement, caractérisé en ce que la zone (13) latérale fragile des éléments (12) d'entretoisement a une épaisseur de 3 microns au plus, notamment de 2 microns.

6. Utilisation suivant la revendication 5, caractérisé en ce que les éléments (12) d'entretoisement ont une longueur comprise entre 50 et 100 microns et une épaisseur comprise entre 4 et 30 microns.

7. Utilisation suivant la revendication 5 ou 6, dans un dispositif d'affichage, ayant un cadre relié d'une manière étanche aux deux plaques, caractérisé en ce que les éléments (12) d'entretoisement sont noyés dans le cadre (7) avec une proportion en poids représentant de 0,05 à 0,3 et, notamment, de 0,1 à 0,2% du poids de la masse du cadre.

8. Utilisation suivant l'une des revendications 5 à 7, dans un dispositif d'affichage, ayant un cadre relié d'une manière étanche aux deux plaques, caractérisé en ce que les éléments (12) d'entretoisement se trouvent à l'intérieur de la chambre délimitée par le cadre (7) et par les deux plaques (2 et 3).

9. Utilisation suivant la revendication 8, caractérisé en ce que les éléments (12) d'entretoisement se trouvant à l'intérieur de la chambre sont noyés dans une masse reliant les deux plaques (2, 3) l'une à l'autre.